# EUROPÄISCHE PATENTSCHRIFT

(11) **EP 1 812 275 B1**
(45) Veröffentlichungstag und Bekanntmachung des Hinweises auf die Patenterteilung: **16.12.2009**
(21) Anmeldenummer: 04822639.3
(22) Anmeldetag: 16.11.2004
(51) Int. Cl.: B62D 5/00, B62D 5/083, B62D 5/30

(54) **HYDRAULISCHE SERVOLENKUNG**
HYDRAULIC SERVO STEERING
DIRECTION ASSISTEE HYDRAULIQUE

(43) Veröffentlichungstag der Anmeldung: 01.08.2007
(73) Patentinhaber: ThyssenKrupp Presta SteerTec GmbH, 40476 Düsseldorf (DE)
(72) Erfinder: NIESSEN, Harwin, 50354 Hürth (DE); VON HAMMEL, Klaus, 21614 Buxtehude (DE); MARZIAN, Christian, 45481 Mülheim/Ruhr (DE)
(74) Vertreter: LENZING GERBER
(86) Internationale Anmeldenummer: PCT/EP2004/012981
(87) Internationale Veröffentlichungsnummer: WO 2006/053578

(56) Entgegenhaltungen:
- DE-A1- 19 950 926
- DE-A1- 19 954 505
- NL-C2- 1 022 734

## Beschreibung

Die vorliegende Erfindung betrifft eine Servolenkung mit den Merkmalen des Oberbegriffs des Anspruchs 1.

Hydraulische Servolenkungen mit Drehschieberventil zur Einstellung der verdrehwinkelabhängigen Unterstützungskraft sind hinlänglich bekannt. Diese hydraulischen Servolenkungen weisen eine hohe Leistungsdichte auf und sind somit auch für schwere Nutzfahrzeuge einsetzbar, haben jedoch den Nachteil, daß die Änderung der Unterstützungskennlinien nur über mechanische Bearbeitung der Steuerkanten im Drehschieberventil möglich sind. Auch ist keine aktive Rückstellung möglich und eine geschwindigkeitsabhängige Unterstützungskennlinie nur mit hohem Aufwand realisierbar.

Ferner sind sog. EPAS Lenkungen bekannt, bei denen die Unterstützungskraft mit Hilfe eines Elektromotors erzeugt wird. Gegenüber den hydraulischen Servolenkungen sind bei EPAS-Lenkungen eine aktive Rückstellung und Endlagendämpfung, geschwindigkeitsabhängige Unterstützungskennlinien und weitere Assistenzfunktionen leicht über Software zu realisieren. Ebenso ist der Verlauf der Unterstützungskennlinien per Software einstellbar. Allerdings weisen die EPAS-Lenkungen den Nachteil auf, daß sie bei einem 12V Bordnetz nur bis 12kN Zahnstangenkraft wirtschaftlich zu implementieren sind.

Aus der DE 195 40 956 ist eine Kombination aus beiden vorbeschriebenen Lenkungen bekannt. So kann die offenbarte Lenkung einerseits als normale Servolenkung mit Drehschieberventil oder aber als Steer-by-wire-Lenkung verwendet werden, wobei kein Servomotor beim Steer-by-wire-Betrieb auf die Zahnstange wirkt, sondern das bereits vorhandene Kolben-Zylinder-Aggregate verwendet wird, wobei über ein zusätzliches Servoventil das Kolben-Zylinder-Aggregat gesteuert wird. Zur Druckregelung ist das Servoventil über die Differenz zwischen einer mit dem Lenkwinkel der Fahrzeugräder korrelierenden ersten Größe und einer zumindest mit dem Stellhub der Lenkhandhabe korrelierenden zweiten Größe steuerbar. Das Handmoment wird im Steer-by-wire-Betrieb mittels eines zusätzlichen Handkraftstellers generiert. Zur Umschaltung von der reinen hydraulischen Lenkung zur Steer-by-wire-Lenkung wird eine Kupplung benötigt, mittels derer die mechanische Verbindung zwischen Lenkhandhabe und Lenkgetriebe lösbar ist.

Aus der DE 3542079 ist ferner eine mechanisch-hydraulische Servolenkung mit Lastdruckrückführung auf den Steuerkolben des Wegeventils zum Beaufschlagen des Stellzylinders für ein Fahrzeug, nach dem Oberbegriff von Anspruch 1 bekannt, welche dadurch verbessert wird, indem der Steuerkolben des Wegeventils mit einer zusätzlichen Druckdifferenz beaufschlagt wird, die in einer elektrisch angesteuerten Ventileinrichtung abhängig von einer Vielzahl von Betriebsparametern und Rückführsignalen erzeugt wird. Als elektrisches Eingangssignal dient u.a. das vom Fahrer am Lenkrad ausgeübte Lenkmoment. Sofern die elektrohydraulische Anordnung durch Störung ausfällt, so bleibt das mechanisch-hydraulische Lenksystem weiter voll funktionsfähig.

Aus der DE 195 40 956 ist eine Servolenkung für Kraftfahrzeuge bekannt, welche eine mechanische Antriebsverbindung zwischen einer Lenkhandhabe und einer Lenkgetriebeanordnung zur Lenkbetätigung von Fahrzeugrädern aufweist. Die Antriebsverbindung läßt sich durch Öffnen einer Kupplung auftrennen. In diesem Falle ist die Lenkhandhabe lediglich mittelbar mit der Lenkgetriebeanordnung gekoppelt, indem in Abhängigkeit vom Stellhub und/oder der Stellgeschwindigkeit der Lenkhandhabe lediglich Sollwerte für den Lenkwinkel der Fahrzeuglenkräder vorgegeben und der Servomotor mittels einer gesonderten Steuerventilanordnung betätigt wird.

Aufgabe der vorliegenden Erfindung ist es, eine aus wenigen herkömmlichen Bauteilen bzw. Systemen bestehende hydraulische Servolenkung bereitzustellen, bei der aktiv die dem Fahrzustand benötigte Unterstützung beliebig per Software einstell- bzw. einregelbar ist, wobei eine mechanische Rückfallebene gegeben ist.

Diese Aufgabe wird erfinderisch mit einer Servolenkung mit den Merkmalen gem. des Anspruchs 1 gelöst.

Vorteilhaft zeichnet sich die erfindungsgemäße hydraulische Servolenkung dadurch aus, daß ein herkömmliches hydraulisches Lenkgetriebe verwendet werden kann, ohne daß es umkonstruiert werden muß. So können mit der erfindungsgemäßen Servolenkung sehr hohe Zahnstangenkräfte aufgebracht werden, wodurch sie vorteilhaft auch im Nutzfahrzeugbereich einsetzbar ist. Gleichzeitig kann die Unterstützung aktiv über das Steuergerät dem jeweiligen Fahrzustand entsprechend eingestellt bzw. - geregelt werden. Hierfür sind im Steuergerät vorteilhaft entsprechende Kennlinienfelder und/oder Regleralgorithmen abgelegt. Auch ist eine aktiv einregelbare Rückführung der ausgelenkten Handhabe in die Mittenstellung, aktive Dämpfung, geschwindigkeitsabhängige Unterstützungskennlinien und weitere Assistenzfunktionen mittels der erfindungsgemäßen Lenkungen vorteilhaft möglich. Für die erfindungsgemäße Lenkung kann ein herkömmliches Drehschieberventil Verwendung finden, welches jedoch im Normalbetrieb des Fahrzeuges nicht über die Lenkhandhabe, sondern über einen gesonderten, insbesondere elektrischen Antrieb verstellt wird. Die Unterstützung kann hierdurch aktiv per Software eingestellt bzw. -geregelt werden. Es ist selbstverständlich Gegenstand der Erfindung, daß ein speziell für diese Erfindung angepaßtes Ventil, welches z.B. ein Drehschieberventil oder ein Linearventil sein kann, Verwendung finden kann. Dieses kann besondere, insbesondere auf den Antrieb abgestimmte Kennlinien aufweisen.

Damit auch bei Ausfall des Ventilantriebes oder dessen Steuerung eine Unterstützung möglich ist, sieht die Erfindung vor, dass das Ventil über eine Kupplung mit der Lenkhandhabe bzw. der mechanischen Verbindung, welche die Handhabe mit dem Lenkgetriebe verbindet, mechanisch verbunden werden kann, so daß bei Ausfall der aktiven Steuerung oder des Ventilantriebes die passive Unterstützungsregelung als Rückfallebene dient. Dabei ist es notwendig, dass ein Steuergerät den Ausfall erkennt und die Kupplung entsprechend ansteuert. So kann auch das Steuergerät selbst dass entsprechende Signal erzeugen, falls der Antrieb oder das Steuergerät selbst eine Fehlfunktion aufweist. Sofern das Steuergerät eine Fehlfunktion aufweist, kann dies z.B. über eine entsprechende Auswertelogik bzw. -elektronik erkannt und die Kupplung von der Auswerteelektronik angesteuert werden. So das Steuergerät insbesondere periodisch ein Signal erzeugen, aufgrund dessen die Kupplung ausgekuppelt bleibt. Sobald das Signal nicht mehr an der Auswerteelektronik bzw. Ansteuerelektronik für die Kupplung anliegt oder periodisch eingeht, wird die Kupplung derart angesteuert, dass sie einkuppelt, so dass eine mechanisch Rückfallebene gegeben ist.

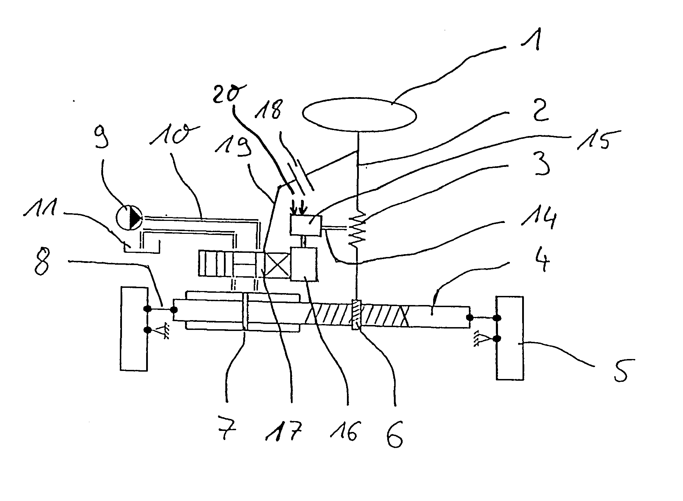

Nachfolgend wird anhand der Figur eine mögliche Ausführungsform der Erfindung näher erläutert.

Die Figur zeigt eine schematische Darstellung der erfindungsgemäßen Servolenkung. Die hydraulische Servolenkung weist eine Handhabe 1, z.B. in Form eines Lenkrades auf, welche über eine mechanische Verbindung (Lenksäule) 2 mit dem Lenkgetriebe 4, 6 mechanisch dauerhaft in Verbindung ist. Am Ende der Lenksäule ist ein Ritzel 6 angeordnet, welches mit der Verzahnung der Zahnstange 4 zusammenwirkt. Die Zahnstange 4 ist ihrerseits mit dem Lenkgestänge 8 und über dieses mit den zu lenkenden Rädern 5 in Verbindung. Ein Drehmomentsensor 3 ermittelt das an der Lenkhandhabe 1 auftretende Handmoment und übermittelt über eine Signalleitung 14 eine entsprechende Größe an ein Steuergerät 15, welches den Ventilantrieb 16 steuert. Mittels einer Ölpumpe 9 wird dem Ventil 17 über Zuleitung 10 Öl mit einem bestimmten Druck zugeführt. Der Öldruck kann vom jeweiligen Fahrzustand und Winkeleinschlag variieren und vom Steuergerät 15 eingeregelt bzw. vorgegeben werden. Das Steuergerät 15 generiert anhand des ermittelten Handmoments und des Fahrzustandes, welcher sich durch die zusätzlich übermittelten Zustandsgrößen 20 ergibt, eine Stellgröße für das Ventil 17. Das Ventil 17 stellt bzw. regelt ein bestimmtes Druckverhältnis im Kolben-Zylinder-Aggregat 7 ein, welches direkt auf die Zahnstange 4 wirkt, wodurch sich eine bestimmte Unterstützung einstellen bzw. einregeln läßt. Der Kolben des Kolben-Zylinder-Aggregates 7 kann, wie bei hydraulischen Servolenkungen üblich, durch einen Bereich der Zahnstange 4 gebildet sein.

Der Antrieb 16 kann z.B. ein Elektromotor, z.B. in Form eines Servos sein. Das Ventil 17 kann ebenfalls ein beliebiges mechanisch antreibbares Ventil, z.B. ein Drehschieberventil oder ein elektromechanisches Linearschieberventil sein. Um die Rückfallebene bei Ausfall des Antriebs 16 oder der Steuerung 15 zu realisieren, ist das Ventil 17 über eine Kupplung 18 mit der Lenksäule im Störfall verbindbar, wodurch eine mechanische Verbindung zwischen Ventil 17 und Lenkhandhabe 1 entsteht und somit das Ventil 17 mittels der Lenkhandhabe - wie bei herkömmlichen hydraulischen Servolenkungen das Drehschieberventil - verstellt wird.

## Patentansprüche

1. Hydraulische Servolenkung für Kraftfahrzeuge mit einer mechanischen Verbindung (2) zwischen einer Lenkhandhabe (1), insbesondere einem Lenkhandrad, einer Lenkgetriebeanordnung (4,6,8) zur Lenkbetätigung von Fahrzeugrädern (5), und einem mit der Lenkgetriebeanordnung gekoppelten Kolben-Zylinder-Aggregat (7), sowie einem insbesondere mechanisch angetriebenen Ventil (17), wobei ein Drehmomentsensor (3) das an der Lenkhandhabe (1) auftretende Handmoment ermittelt und an ein Steuergerät (15) übermittelt, und daß das Steuergerät (15) einen Antrieb (16) in Abhängigkeit des Fahrzustandes ansteuert, welcher das Ventil (17) verstellt, und das Ventil (17) eine Druckverteilung zur einzustellenden oder einzuregelnden Unterstützung im Kolben-Zylinder-Aggregat (7) einstellt oder -regelt, **dadurch gekennzeichnet, daß** die mechanische Verbindung (2) dauerhaft ist und daß eine Kupplung (18) zwischen dem Ventil (17) und der mechanischen Verbindung (2) angeordnet ist, mittels derer bei Ausfall des Antriebs (16) oder dessen Steuerung (15) das Ventil (17) über die Lenkhandhabe (1) mechanisch zwangsgeführt wird.

2. Hydraulische Servolenkung nach Anspruch 1, **dadurch gekennzeichnet, daß** das Ventil (17) ein Drehschieberventil ist.

3. Hydraulische Servolenkung nach Anspruch 1 oder 2, **dadurch gekennzeichnet, daß** das Steuergerät ein Signal, insbesondere periodisch, erzeugt, wobei die Ansteuerungselektronik für die Kupplung bei verändertem, ausbleibendem oder nicht mehr periodischem Signal die Kupplung derart ansteuert, dass diese einkuppelt.

## Claims

1. Hydraulic power-assisted steering for motor vehicles with a mechanical connection (2) between a steering handle (1), in particular a steering handwheel, a steering gear arrangement (4, 6, 8) for the steering actuation of vehicle wheels (5) and a piston-cylinder unit (7) which is coupled to the steering gear arrangement, as well as a valve (17) which is in particular mechanically driven, wherein a torque sensor (3) establishes the manual torque occurring at the steering handle (1) and transmits this to a control device (15), and that the control device (15) controls a drive (16) in accordance with the running condition, which drive adjusts the valve (17), and the valve (17) sets or regulates a pressure distribution for the assistance to be set or to be regulated in the piston-cylinder unit (7), **characterised in that** the mechanical connection (2) is permanent, and that a clutch (18) is disposed between the valve (17) and the mechanical connection (2), by means of which clutch the valve (17) is mechanically guided in a restricted manner via the steering handle (1) in the event of failure of the drive (16) or of the control unit (15) thereof.

2. Hydraulic power-assisted steering according to Claim 1, **characterised in that** the valve (17) is a rotary slide valve.

3. Hydraulic power-assisted steering according to Claim 1 or 2, **characterised in that** the control device generates a signal, in particular periodically, wherein the control electronics for the clutch controls the clutch if the signal is variable, non-existent or no longer periodic such that this clutch engages.

## Revendications

1. Direction assistée hydraulique pour véhicule automobile, comprenant une liaison mécanique (2) entre un organe manuel de direction (1), en particulier un volant de direction, un agencement de transmission de direction (4, 6, 8) pour l'actionnement de roues directrices (5) du véhicule, et un groupe à piston-et-cylindre (7) accouplé à l'agencement de transmission de direction, ainsi qu'une vanne (17), en particulier à actionnement mécanique, dans laquelle un capteur de couple de rotation (3) détecte le couple manuel qui apparaît au niveau de l'organe manuel de direction (1) et le transmet à un appareil de commande (15), et en ce que l'appareil de commande (15) pilote un entraînement (16), en fonction de la situation de circulation, qui déplace la vanne (17), et la vanne (17) établit ou régule une répartition de la pression pour une assistance à établir ou à réguler dans le groupe à piston-et-cylindre (7),
**caractérisée en ce que** la liaison mécanique (2) est permanente, et **en ce qu'**un accouplement (18) est agencé entre la vanne (17) et la liaison mécanique (2), au moyen duquel la vanne (17) est pilotée mécaniquement à force via l'organe manuel de direction (1) en cas de panne de l'entraînement (16) ou de sa commande (15).

2. Direction assistée hydraulique selon la revendication 1, **caractérisée en ce que** la vanne (17) est une vanne à tiroir rotatif.

3. Direction assistée hydraulique selon la revendication 1 ou 2, **caractérisée en ce que** l'appareil de commande génère un signal, en particulier périodique, et lorsque le signal est modifié, absent ou si celui-ci n'est plus périodique, l'électronique de pilotage pour l'accouplement pilote l'accouplement de telle façon que celui-ci effectue un accouplement.
